# EUROPEAN PATENT APPLICATION

(11) **EP 3 996 050 A1**
(43) Date of publication of application: **11.05.2022**
(21) Application number: 20205906.9
(22) Date of filing: 05.11.2020
(51) Int. Cl.: G06T 15/08, G06T 19/00

(54) **IMAGE RENDERING METHOD FOR TOMOGRAPHIC IMAGE DATA**

(71) Applicant: Koninklijke Philips N.V., 5656 AG Eindhoven (NL)
(72) Inventor: WIEMKER, Rafael, 5656 AE Eindhoven (NL); BYSTROV, Daniel, 5656 AE Eindhoven (NL); GOSHEN, Liran, 5656 AE Eindhoven (NL)
(74) Representative: Philips Intellectual Property & Standards

(57) **Abstract**

A method for generating an image representation of slices through a body based on tomographic imaging data for the body. The method comprises processing reconstructed tomographic image slices to selectively embed in each slice image information from at least one 3D volume rendering of the slice plane within the 3D tomographic image dataset. This is done through a selection process wherein, based on a set of pre-defined criteria, a decision is made for each pixel in each reconstructed tomographic slice as to whether the pixel value should be replaced with a new, modified pixel value determined based on the at least one volume rendering. This may comprise simply swapping the pixel value for the value of the corresponding pixel value in the volume rendering, or it may comprise a more complex process, for instance blending the two values, or adjusting a transparency of the pixel value based on the at least one volume rendering.

## Description

### FIELD OF THE INVENTION

This invention relates to a method for use in generating an image based on tomographic imaging data.

### BACKGROUND OF THE INVENTION

Tomography is a method of imaging by sections or sectioning through the use of any kind of penetrating wave. One example is x-ray computed tomography (CT), most commonly used for medical purposes. However the approach is used more broadly in a wide range of scientific fields.

The generation of tomographic images is usually based on a mathematical procedure known as tomographic reconstruction. Different reconstruction algorithms exist. Most algorithms fall into one of two categories: filtered back projection (FBP) and iterative reconstruction (IR). Tomographic reconstruction is applied to each slice in turn, and is based on the projection data acquired for the single slice only. This may be referred to as slice-wise image reconstruction, or, more generally, simply tomographic image reconstruction.

Tomographic image reconstruction in its most wide-spread use case provides only a 2D representation or rendering of a particular slice through the scanned body. It therefore requires application of clinical experience and expertise to interpret the image. There is information which a tomographic, slice-wise, reconstruction is unable to provide, such as depth or texture information.

To remedy this shortcoming, it is known to additionally apply 3D volume rendering techniques to acquired tomographic imaging data. It can be applied to reconstructed tomographic image data, utilizing the reconstructed pixel values within this data. Volume rendering is an image rendering technique which is used to display a 2D projection of a 3D image data set. The plurality of slice images acquired from the tomographic scan forms a 3D image dataset, which can be understood as a regular volumetric grid of pixels. Generating the 3D representation utilizes image data from a plurality of slices. One example technique is volume ray casting in which sampling rays are notionally projected through the 3D image dataset toward (and potentially through) an image plane, and wherein each pixel value in the image plane is determined based on values of the set of pixels intersected by the respective ray which is projected onto it.

X-ray spectral CT is an imaging modality that extends the capabilities of a conventional x-ray CT system by acquiring projection data for a plurality of x-ray energies. This can be done by incorporating a detector which can discriminate between different x-Ray energies, e.g. an energy discriminating photon counting detector or energy integrating detector, or by sequentially changing the x-ray energy spectrum and sequentially acquiring corresponding detector data. Spectral x-ray data allows for discerning and quantifying materials comprised by the scanned object. This is because different materials may have different x-ray absorption spectra. An x-ray energy spectrum can be used which is known to be maximally or minimally absorbed by a material of interest for example.

One particular field of tomographic imaging is that of x-ray CT colonography.

CT-colonography is a well-established test for early recognition and prevention of colorectal cancer. Oral contrast agent is administered for tagging of stool residuals in the colon.

The reading of CT-colonography scans is performed using standard trans-sectional slice views (i.e. tomographic slice reconstructions), as well as virtual endoluminal renderings (fly-through-view). The virtual endoluminal rendering yields a three-dimensional impression intended to resemble optical colonoscopy. Therefore, virtual endoluminal renderings use a perspective projection geometry (as opposed to orthographic, parallel rays).

Spectral-CT can be used in the field of CT colonography to generate a number of spectral channels (at least two) corresponding to the lower and high-energy levels of the projected x-ray energy. The spectral channels can be converted into various representations, including for example iodine-density maps, which can enable visualization of contrast agent distribution within the imaged colon.

There are a number of problems with existing approaches to CT colonography.

First, generating an endoluminal rendering requires selecting an accurate path along the colon centerline. However, automatic path tracking is often erroneous, as the colon is often divided into several components due to constrictions, and closely intertwined with the small bowel and stomach.

Furthermore, there is a lack of visual correspondence between endoluminal renderings (generated using a perspective geometry), and the standard slice-wise tomographic reconstructions (using orthographic geometry). A clinician must apply their experience and knowledge to mentally map the two renderings onto one another, to interpret the information provided by each. Information as to how one spatially maps onto the other is therefore missing and has to be supplemented by a user.

A further problem is that stool residuals appear opaque in standard volume renderings, because their density is as high as the colon wall. Polyps may thus be overlooked when submerged and thus hidden in stool residuals.

An improved approach to rendering of tomographic image data would be of value.

### SUMMARY OF THE INVENTION

The invention is defined by the claims.

According to examples in accordance with an aspect of the invention, there is provided a computer-implemented method for generating an image based on a tomographic imaging dataset of a 3D object, the method comprising:
obtaining reconstructed tomographic image data for each of a plurality of slices through the 3D object, the image data for each slice comprising pixel values for the slice, the reconstructed tomographic image data for the plurality of slices forming at least one 3D image dataset;
for each of at least a subset of the slices
   selecting a subset of the pixels of the slice to be rendered using pixel values obtained by at least one volume rendering of the 3D image dataset, and wherein the selection is based at least in part on the pixel value for each pixel in the reconstructed tomographic image data,
   performing a volume rendering of at least the selected subset of pixels of the slice based on application of a volume rendering procedure to the 3D imaging dataset, and wherein a plane defined by the slice within the 3D image dataset forms an imaging plane of the volume rendering, and
   constructing a composite image rendering of the slice, based on modifying the pixel values of the selected subset of pixels in the slice from the reconstructed tomographic image data using the pixel values from the volume rendering; and
generating a data output representative of the constructed one or more composite images.

Embodiments of the present invention are based on embedding volume rendering information into 2D slice-wise reconstructions of tomographic slices. The result is a hybrid image for each of at least a plurality of slices, the hybrid image including visual information from both a volume rendering representation of an anatomical object or region of interest and a standard tomographic reconstruction of the tomographic slice data. This provides the advantage that a viewer of the image is presented relevant visual information from both of the types of image rendering, but within a single image frame and wherein the spatial correspondence between the volume rendering view and the tomographic reconstruction view is inherently communicated. This spatial correspondence is inherently achieved because the 3D volume rendering is generated using the identical 3D image data as constitutes each of the slice reconstructions, and based on a rendered viewing plane which corresponds (is identical to) the plane of the tomographic slice. By then swapping or replacing pixels of the tomographic reconstruction image of the slice with those of the 3D volume rendering of the same slice plane (or swapping them for pixel values that have been modified directly based on the volume rendering pixels), the visual information from both is provided in a single, clear image frame.

Information as to how one rendered view spatially maps onto the other is thus automatically provided by the composite rendering and does not have to worked out by a user mentally in their own minds.

A further advantage is that this rendering approach saves screen space on the viewing device by not having to display both the tomographic slice reconstruction, and a 3D representation. Both can be embedded together in one viewing plane. This avoids an overcrowded display, and can avoid the need for additional displays to view all of the information.

The selection of the subset of pixels can be done by applying a selection procedure or assessment, employing use of pre-defined selection criteria for each pixel. By way of example, the selection criteria for the pixels to be volume rendered in the final image may be based on identifying pixels which correspond spatially to a target anatomical structure, for example the wall of a colon of a subject. This could be based on expected pixel values for regions of the reconstructed image which represent the target object (e.g. based on a threshold for the grey value, or density). This way, in the final image, the object of interest is rendered with a 3D volume rendering, thus providing useful depth and texture information, while the remainder of the image is rendered using the pixel values from the flat tomographic slice reconstruction. By way of example, in the field of colonography, the target 3D object may be the colon, or a region thereof.

For avoidance of doubt, the tomographic image reconstruction data refers to image data reconstructed for each slice independently, based on a reconstruction applied to the scan data corresponding to that slice only.

The volume rendering for a given slice is based on pixel values from a plurality of slices in the 3D image dataset. In particular, in at least one set of embodiments, it may be based on projecting sampling rays through the 3D image dataset, and wherein each pixel value in a given slice is determined based on pixel values intersected or encountered along the path of the respective ray which passes through the respective pixel in the slice plane.

Reconstructed tomographic image data is data resulting from application of image reconstruction to raw tomographic scan data (projection data). It comprises at least one pixel value for each pixel of each of a plurality of slices through the scanned object.

In some examples, the reconstructed tomographic image data is reconstructed x-ray CT image data. Here, the pixel values in the reconstructed slices may in some examples correspond to Hounsfield density values.

In some cases, the reconstructed tomographic image data may comprise a plurality of reconstructed images for each slice. For example, the tomographic image data may be spectral CT data, and wherein multiple sets of data exist for each slice, each corresponding to a different spectral channel of the data acquisition. Here, there are multiple pixel values for each pixel in the slice.

In some examples, the volume rendering may be generated for only the selected subset of pixels in each plane.

Typically a volume rendering is generated pixel-by-pixel, and thus it is straightforward to generate the pixel values for just a selected subset of pixels of a volume rendered image. For example, in ray-tracing-based volume rendering techniques, a respective sampling ray is projected from a starting point through the 3D volume data to and/or through each respective pixel in the imaging plane. Thus, just the rays corresponding to the selected subset of pixels could be projected.

The advantage of this approach is this that processing resource, and processing time, is saved compared to generating the full volume rendering of the whole slice plane within the 3D image dataset.

However, it is also an option to generate the volume rendering of the whole slice plane.

In accordance with one or more embodiments, selecting the subset of pixels of the slice to be rendered using pixel values obtained by a volume rendering may be performed pixel-by-pixel. For example, the step may comprise iterating or indexing through the set of pixels forming each slice, and determining for each pixel whether it should be rendered using the volume rendering or using the tomographic reconstruction of the slice.

In accordance with one or more embodiments, the volume rendering procedure may be a volume ray-casting method, and wherein the sampling rays are cast through the 3D dataset orthogonally with respect to the plane of each slice.

This means that the volume rendering provides an orthographic view rather than a perspective view. This ensures that the image data in the volume rendering corresponds orientationally to the plane of each slice. In other words, the viewpoint with respect to which the volume rendering is generated corresponds to the same viewpoint as the tomographic slice reconstruction, i.e. looking orthogonally toward the plane of the slice.

The ray casting may be a one-view ray casting, i.e. rays are cast from one direction only. Alternatively, rays may be cast from a plurality of directions.

As noted above, the selection of the subset of pixels may be based on identifying pixels which correspond spatially to a target anatomical structure.

The selection is based on a one or more selection criteria applied to each of the pixels. The selection criteria are configured so as to identify pixels which correspond to areas occupied by a pre-defined anatomical structure.

This could be based for example on use of a simple threshold for the pixel grey values, e.g. based on prior knowledge that tissue belonging to a certain anatomical object results in higher or lower grey values than surrounding tissue. A further option might be application of one or more image analysis algorithms to identify the boundaries of the target object within the given slice. These may include segmentation algorithms or shape matching algorithms for example.

The one or more selection criteria used to select the pixels may include a pre-defined threshold for the pixel value of each pixel in the tomographic slice reconstruction.

The threshold may be a minimum threshold or a maximum threshold for the pixel value in order for the respective pixel to be selected for rendering using the volume rendering process.

In accordance with one or more sets of embodiments, the tomographic imaging data may be x-ray computed tomography imaging data.

The obtaining the reconstructed image data may comprise receiving input tomographic projection data, and performing a tomographic image reconstruction for each slice in turn.

In this example, the method comprises the step of generating the tomographic reconstructions of each slice.

In accordance with one or more embodiments, the tomographic image data may be spectral CT image data, and wherein the reconstructed tomographic image data includes a plurality of different image reconstructions for each slice, forming a plurality of different 3D image datasets, and wherein each of the different image reconstructions is based on CT projection data corresponding to a different spectral channel.

Spectral CT is an extension of standard CT imaging, wherein x-ray energy is projected through an imaged object at a plurality of x-ray energies. X-ray detectors acquire projection data measurements for each of the energies, either simultaneously or sequentially. The projection data for the different x-ray energies can be referred to as projection data of different spectral channels.

In accordance with one or more examples, the imaged volume may be representative of an anatomical region of a subject, and wherein the region contains an administered contrast agent. The 3D imaging dataset for one of the spectral channels may comprise pixel values indicative of a density of the contrast agent at the pixel location.

The volume rendering for said one of the spectral channels may be configured to vary a transparency of rendered pixels based on the pixel values of the tomographic image data for said contrast-agent indicative spectral channel. Hence here, transparency of pixels is determined based on the density of contrast agent in a spatial region to which that pixel corresponds in the 3D image dataset. For example, where the contrast agent density exceeds a certain threshold, the pixel may be made or treated as transparent. This ensures that certain structures, such as polyps, are not missed to accumulated contrast agent (e.g. in accumulated stool residue in a colon) obscuring view of the structure.

The volume rendering may in some examples be a ray casting method, and wherein the transparency of a given pixel when performing the volume rendering is determined based on the accumulated pixel values along a sampling ray which intersects the pixel in the slice plane within the 3D image dataset for said contrast agent-indicative spectral channel. In some examples, this may mean that the transfer function used to determine the pixel value in the volume rendered image is configured so that pixels encountered along the ray path which exceed a certain value (i.e. indicative of high contrast agent density) are treated as transparent, or given a low or zero weighting. This ensures that the rendered pixel in the volume rendered image has a pixel value which depends only on tissue densities, and not on density of the contrast agent.

In accordance with one or more embodiments, the method may further comprise receiving a user input signal. The method may further comprise selectively generating: a first display output representative of either the tomographic reconstruction for one or more slices, or, a second display output representative of the composite reconstruction of one or more slices. The selection of the first or second display output may be dependent upon the user input.

Here, the data output is a display output. The display output can be switched between display of the tomographic reconstruction of a given slice, or the composite rendering of the slice. Optionally, display of the volume rendering may be a further option, selectable based on the user input.

The method may comprise selectively toggling the display output between the first and second display outputs, wherein the toggling is triggered by the user input signal.

Here functionality is implemented to enable a user to easily toggle between the different rendered images of a slice, for example based on pressing a single key or button on a user input device (e.g. a space bar), the pressing of this single user control resulting in transmission of the relevant user input signal.

Examples in accordance with a further aspect of the invention provide a computer program product comprising computer program code, the computer program code being executable on a processor, the code configured to cause the processor to perform a method in accordance with any example or embodiment outlined above or described below, or in accordance with any claim of this application.

Examples in accordance with a further aspect of the invention provide a processing arrangement for use in generating an image based on a tomographic imaging dataset of a 3D object, the processing arrangement adapted to:
obtain reconstructed tomographic image data for each of a plurality of slices through the 3D object, the reconstructed tomographic image data for each slice comprising pixel values for the slice, the reconstructed tomographic image data for the plurality of slices forming at least one 3D image dataset;
for each of at least a subset of the slices:
   select a subset of the pixels of the slice to be rendered using pixel values obtained by at least one volume rendering of the 3D image dataset, and wherein the selection is based at least in part on the pixel value for each pixel in the reconstructed tomographic image data
   perform a volume rendering of at least the selected subset of pixels of the slice based on application of a volume rendering procedure to the 3D imaging dataset, and wherein a plane defined by the slice within the 3D image dataset forms an imaging plane of the volume rendering, and
   construct a composite image rendering of the slice, based on modifying the pixel values of the selected subset of pixels in the slice from the reconstructed tomographic image data using the pixel values from the volume rendering; and
generate Examples in accordance with a further aspect of the invention provide a system, comprising a processing arrangement in accordance with any example or embodiment outlined above or described below, or in accordance with any claim of this application; and a display unit operatively coupled to the processing arrangement for displaying one or more of the composite images.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying schematic drawings, in which:
Fig. 1 outlines steps of an example method according to one or more embodiments;
Fig. 2 schematically outlines an example workflow according to one or more embodiments;
Figs. 3-5 show example image rendering results of application of a method according to one or more embodiments;
Fig. 6 is a block diagram showing components of an example system in accordance with an aspect of the invention; and
Fig. 7 shows components of an example CT imaging system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for generating an image representation of slices through a body based on tomographic imaging data for the body. The method comprises processing reconstructed tomographic image slices to selectively embed in each slice image information from at least one 3D volume rendering performed on the 3D tomographic image dataset. This is done through a selection process wherein, based on a set of pre-defined selection criteria, a decision is made for each pixel in each reconstructed tomographic slice, as to whether the pixel value should be replaced with a new, modified pixel value determined based on the at least one volume rendering. This may comprise simply swapping the pixel value for the value of the corresponding pixel value in the volume rendering for the corresponding slice plane, or it may comprise a more complex process, for instance blending the two values, or adjusting a transparency of the pixel value based on the at least one volume rendering.

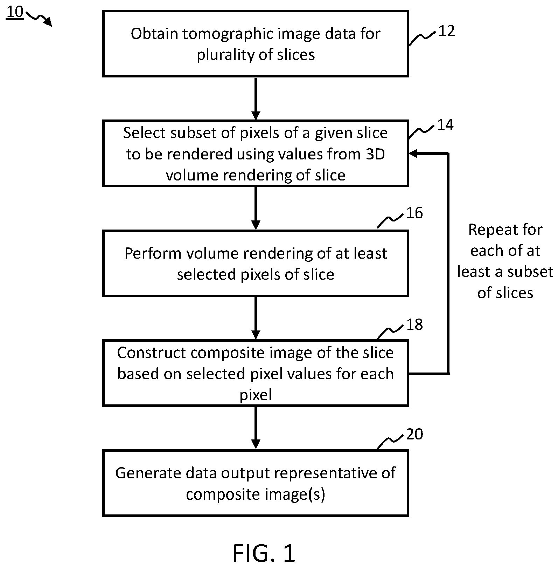

Fig. 1 shows a block diagram outlining the basic steps of an example computer-implemented method 10 in accordance with one or more embodiments. The method is for generating an image based on a tomographic imaging dataset of a 3D object.

The method 10 comprises obtaining 12 reconstructed tomographic image data for each of a plurality of slices through the 3D object. The image data for each slice comprises pixel values for the slice and the image data for the plurality of slices forms at least one 3D imaging dataset.

The method 10 further comprises, for each of at least a subset of the slices:
selecting 14 a subset of the pixels of the slice to be rendered using pixel values obtained by at least one volume rendering representation of the slice plane within the 3D image dataset, and wherein the selection is based at least in part on the pixel value for each pixel in the tomographic reconstruction,
performing 16 a volume rendering of at least the selected subset of pixels of the slice plane based on application of a volume rendering procedure to the 3D imaging dataset, and
constructing 18 a composite image rendering of the slice, based on modifying the pixel values of the selected subset of pixels in the tomographic reconstruction for the slice using the pixel values from the volume rendering.

The method 10 further comprises generating 20 a data output representative of the constructed one or more composite images. This may be a display output in some examples or a data representation of the constructed image for recording in a local or remote datastore. The generated data output may be coupled to a local or remote data store for later use. Additionally or alternatively the data output may be communicated to a display device for display to a user.

The obtaining the tomographic image data may comprise receiving input tomographic projection data, and performing a tomographic image reconstruction for each slice in turn, for example using a filtered back projection algorithm. The alternative option is for the method to comprise receiving reconstructed tomographic image data, where the data has already been reconstructed externally.

More than one 3D image dataset may be obtained. For example, the tomographic image data may be spectral CT image data which includes multiple reconstructions of each slice, based on different spectral channels of acquired projection data.

The process of selecting the subset of pixels to have their pixel values modified based on the 3D rendering may be based on application of one or more selection criteria. At least one of the selection criteria may relate to a pixel value of each respective pixel within the tomographic reconstruction of the relevant slice. For example a threshold for the pixel value in the tomographic reconstruction may be used as at least one of the criteria. The selection criteria may be predefined and for example stored in a local or remote datastore. They may be configurable by a user in some examples. There may be pre-stored a number of different image rendering modes or settings, each associated with a different set of selection criteria for generating a rendered image with certain properties or features. The different modes may be selectable by the user.

By way of example, in an advantageous set of embodiments, the selection criteria for the pixels may be based on identifying pixels which correspond spatially to a target anatomical structure. This could be based on expected pixel values for regions of the reconstructed image which represent the target object (e.g. based on a threshold for the grey value, or density, or other pixel value). This way, in the final image, the object of interest is rendered with a 3D volume rendering, thus providing useful depth and texture information, while the remainder of the image is rendered using the pixel values from the flat tomographic slice reconstruction. By way of one example, the target anatomical structure could be the wall of the colon of a subject.

A wide range of different volume rendering methods may be used in accordance with embodiments of the invention. The volume rendering is applied to the at least one 3D image dataset formed by the reconstructed tomographic image data.

In preferred embodiments, a direct volume rendering method is used.

One preferred example is volume ray casting or volume ray tracing. This is an example of direct volume rendering. In volume ray casting, a respective sampling ray is generated for each desired pixel in the rendered image. An observer viewpoint is defined. Each ray starts at a center of projection of the viewpoint, and passes through a respective one of the image pixels on a defined image plane. The ray is sampled at regular intervals along the ray path, and a transfer function applied to the set of sampled pixel values to derive a pixel value for the respective pixel in the imaging plane to which the ray corresponds. By way of example, the pixel value can be a grey value, an RBG value, an opacity value, or a value representing any other visual or graphical characteristic or property.

In the context of the present invention, for generating a volume rendering for a particular slice, the plane defined by the slice within the 3D image dataset is used as the notional image plane within the volume rendering. The transfer function for the volume rendering can be configured as desired for generating a desired visual representation of the 3D object imaged in the imaging data.

By way of example, the transfer function may apply a differing weight to pixels encountered along the path of each ray in dependence upon the pixel values of the pixels in the 3D image dataset. The weightings may vary non-linearly with respect to the pixel value. For example, there may be threshold above or below which a very low or zero weighting is applied. This allows for example selective rendering of only particular tissue types in the final volume rendered image.

By way of example, the volume rendering may be configured for representing a view of a particular anatomical object within the 3D image dataset. This object may be characterized by pixel values which are on average higher or lower than that of surrounding areas. For example, the material of the object may be denser than surrounding areas. This is the case for example for a solid object imaged within air. It may also be the case for an anatomical object such as an organ, or other anatomical structure, within the surrounding tissue of the body. The transfer function may define a minimum or maximum threshold, whereby only pixels falling below the minimum threshold or exceeding the maximum threshold may be taken into account in the rendered pixel value. Those not meeting the threshold may be discounted. This would result in a volume rendering in which just the target anatomical or other object within the image data is represented in the final rendered image. By way of one advantageous example, this might be used to provide a rendering of walls of an imaged colon for instance.

In preferred examples, where a volume ray tracing approach is used, the sampling rays may be cast through the 3D dataset orthogonally with respect to the plane of each slice. This means that the volume rendering provides an orthographic view rather than a perspective view. This makes the combined composite image easier to interpret. In particular, the slice-wise rendering and volume rendering depict objects at the same size and position, and thus blend seamlessly into each other.

In some examples, the tomographic image data may include a plurality of image reconstructions for each slice, each reconstruction being based on a different subset of tomographic projection data. In one set of examples, each image dataset may be data acquired using a different spectral channel of the tomographic scanner, e.g. a different spectral CT channel. In some examples, the volume rendering for a given slice may take into account the data from more than one of such a plurality of reconstructions.

By way of one specific example, one of the image reconstructions may be reconstructed from CT projection data acquired in a spectral channel being sensitive to density of a contrast agent administered to an imaged subject, e.g. to the iodine content of a contrast agent. A further of the image reconstructions may be reconstructed from a different spectral channel which is sensitive to the general biological tissues comprised by the body of the subject, and thus represents density of tissue in the body.

A volume ray casting may be performed in which for each pixel sampled along each cast ray, the pixel value in both of the image reconstructions is taken into account in the transfer function. By way of example, the pixel values from the contrast-agent-sensitive channel may be used to define a transparency to apply to pixels along the sampled ray, and the pixel values in the other spectral channel may be used to define a grey value of RGB value of each pixel. For example, pixels have pixel values indicative of a high density of the contrast agent may be made transparent or translucent. For example, a threshold may be set for transparency.

For example, at each sampling point of the direct volume rendering sampling ray, the fractional increase of the iodine density may be accumulated. The amount of iodine density signifies the tagging by contrast agent. This can be used to control the transparency of the ray, making the tagged parts effectively translucent in the volume rendering. Optionally, the tagged areas can also be color-coded ('dyed'), so that the viewer receives a visual cue where tagged material has been present.

This may be advantageous to ensure that areas of accumulation of contrast agent do not obscure anatomically or physiologically relevant portions of the imaged object in the final rendered image. For example, in the context of colonography, this can be used to ensure that build-up of stool residue (containing the contrast agent) in the colon does not obscure anatomical structures in the colon such as polyps.

Although above examples have been directed to use of a direct volume rendering method, this is not essential. In further embodiments, other classes of volume rendering technique could be used, for example surface rendering of a triangle mesh which maps the surface of an anatomical object of interest. In this example, the surface mesh may need to be determined in advance as a preliminary step, e.g. using segmentation techniques.

In some examples, the result of the volume rendering for each slice may be reused in generating the volume rendering of a subsequent slice. This may reduce the processing resource necessary to generate each subsequent 3D rendered slice.

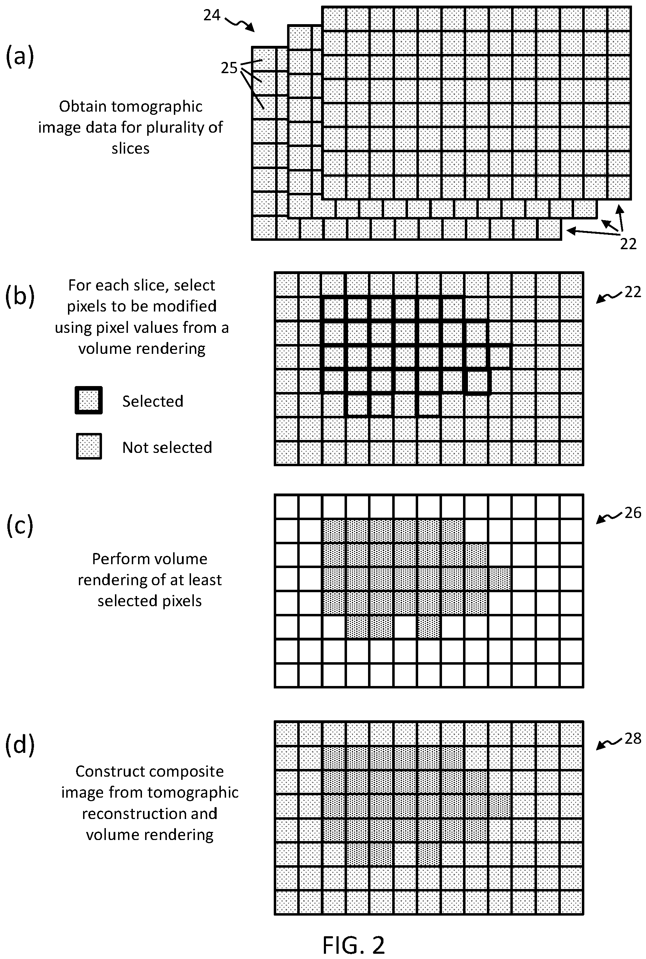

A workflow of an example method is schematically illustrated in Fig. 2, and will be briefly described below.

In operation, a set of reconstructed tomographic image data is obtained (Fig. 2(a)). This comprises at least one 3D image dataset 24 which comprises a respective tomographic reconstruction 22 of each of a plurality of slices through a scanned body. As noted above, in some cases, a plurality of 3D image datasets may be obtained of the same volumetric region, for instance corresponding to different spectral channels of a spectral CT imaging system.

The method further comprises, for each slice, selecting a subset of the pixels 25 of the slice to have their pixel values modified based on pixel values of a 3D volume rendering for the slice plane. This is illustrated schematically in Fig. 2(b). By way of example, the selection procedure may be performed pixel-by-pixel, based on iterating or indexing or stepping through each of the pixels one-by-one and determining whether the pixel is to be re-rendered (i.e. its pixel value modified) based on a volume rendering. The determining for each pixel may be based on pre-defined selection criteria which may relate at least in part to the pixel value of the respective pixel within the reconstructed tomographic slice image 22. For example, this may be a simple threshold. Once a determination has been made for a pixel, the determination is recorded, for instance in a local memory or cache, and the process moves on to the next pixel.

Once the selection of the subset of pixels to be modified using the volume rendering has been made (Fig. 2(b)), the method further comprises generating a volume rendering from the 3D dataset for at least the selected subpixels of the slice plane (Fig. 2(c)). For a given slice, this means generating a volume rendering in which the plane defined by the slice within the 3D image dataset is used as the notional image plane within the volume rendering. For instance in a ray casting method, respective rays may be cast from a notional viewpoint, through each relevant pixel of the image plane, and through the 3D image dataset. This has been described in more detail above. It is possible to just generate the volume rendering for a subset of the pixels. For instance, in a volume ray tracing method, this means just casting the rays that pass through the selected subset of pixels of the slice plane. In other examples, a volume rendering for the whole slice plane may be generated. If the volume rendering is performed for the whole of the slice plane, it is possible to perform the volume rendering for each slice in advance of selecting the subset of pixels. Alternatively, the volume rendering may be generated after the selection of the subset of pixels.

Once the volume rendering has been performed, a composite image is generated (Fig. 2(d)) for the respective slice based on modifying the pixel values of the selected subset of pixels of the tomographic slice reconstruction based on the pixel values obtained for the corresponding pixels in the volume rendering. In one example, the pixel values from the tomographic reconstruction image are simply replaced by those of the corresponding pixels in the volume rendered image. In a further example, the pixels values of the selected pixels may be blended with the pixel values from the volume rendering. In a further example, the pixel appearance in the slice reconstruction may be modified in a defined way according to a modification function, wherein the modification function is dependent upon the pixel value for the corresponding pixel in the volume rendering. For example, a transparency, opacity, color, saturation, intensity or another graphical property of a pixel might be adjusted based on pixel values in a volume rendering.

The steps of Figs. 2(b)-(d) are repeated for each of at least a subset of the slices of the 3D image dataset, to thereby generate composite images for each of the slices.

In some examples, more than one composite image may be generated, for example in cases in which there is more than one 3D image dataset.

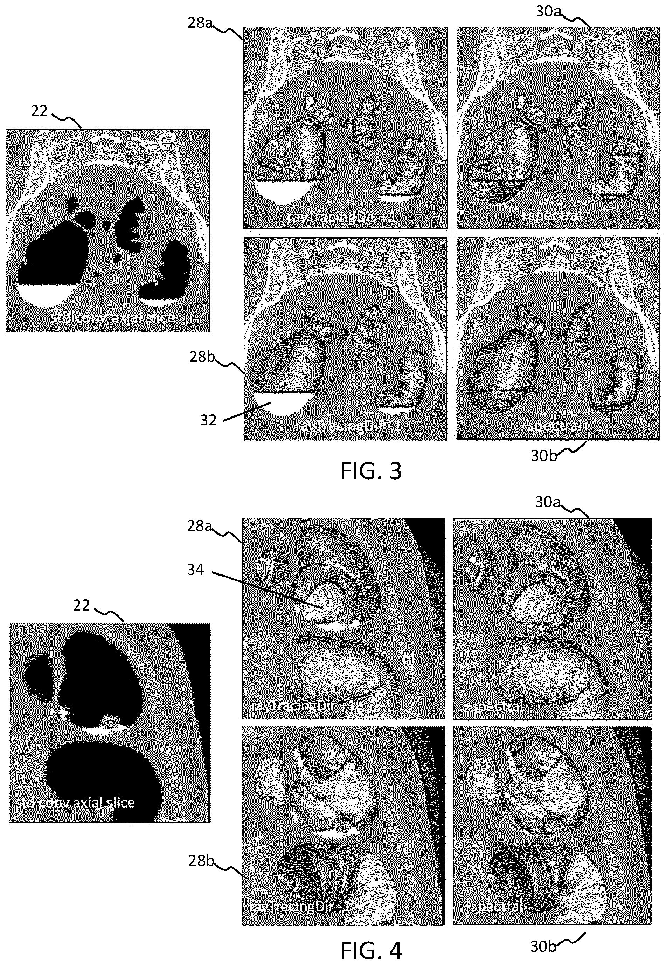

Fig. 3 shows an example result of application of the method 10 according to an embodiment to a 3D image dataset of a region containing the colon of a subject. In this example, the images have been derived from CT scan data for the region. The left-most image 22 shows the tomographic image reconstruction of a particular slice through the region. This represents the 'standard' slice-wise view as would be provided in a standard CT scan of the colon. It can be seen that the structural information regarding the morphology and texture of the colon is not visible. Only the cross-sectional shape and outline of the colon is visible. The middle row (images 28a and 28b) show example composite images generated according to an embodiment of the invention. It can be seen that regions of the colon wall are rendered based on a volume rendering, with the result that the morphology of the colon wall can be seen more clearly, due to the fact that the volume rendering provides depth information. The volume rendering in this example has been generated using a ray tracing method. The top row of images correspond to ray tracing in which the rays were cast through the 3D image dataset in a positive z direction (+1) and the bottom row correspond to ray tracing in which the rays were cast in a negative z-direction (-1). The z-direction means a direction orthogonal to the plane of the slice. Images 28a, 28b correspond to composite images formed from a volume rendering performed on non-spectral CT data. The images 30a, 30b correspond to composite images formed from a volume rendering performed on spectral CT data, which includes at least one spectral channel which represents an iodine density map (i.e. is sensitive to iodine contrast agent). In images 30a, 30b, regions of high iodine (contrast agent) density have been rendered translucent (optionally also with color coding). As such, a region (indicated by label 32) which contains a build-up of contrast agent is made translucent in images 30a, 30b, while in images 28a, 28b it results in a large area which is obscured.

Fig. 4 shows a further example result of application of the method 10 according to an embodiment to a 3D image dataset of a region containing the colon of a subject. The set-up details of this example are the same as in the example of Fig. 3, in that image 22 represents the tomographic reconstruction of the slice, images 28a, 28b represent a composite images formed using non-spectral CT data and images 30a, 30b represent composite images formed using spectral CT data, in which an iodine-comprising contrast agent has been rendered translucent. In this example, the imaged colon contains a polyp 34 near the center. The three-dimensional cues of the volume rendering allow improved visual distinction of the polyp from Haustral folds of the colon. The polyp is hardly discernable in the standard slice-wise image 22.

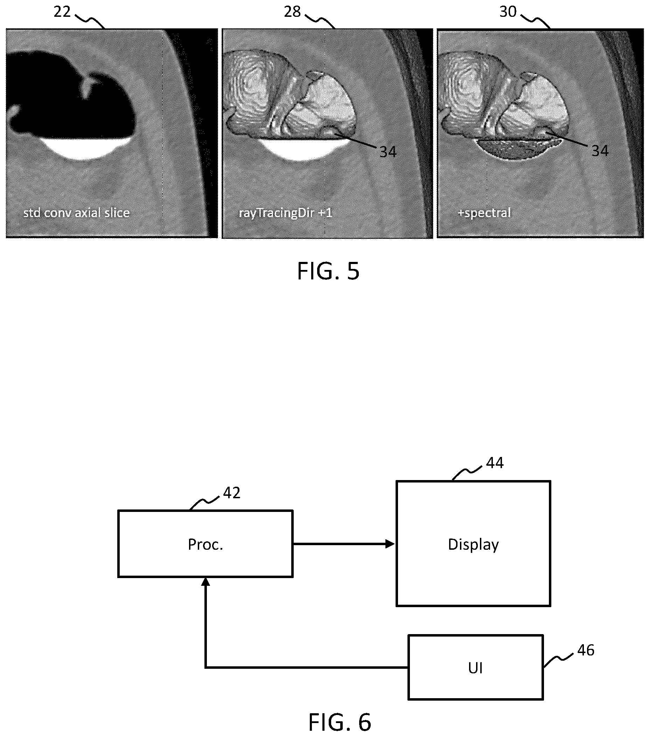

Fig. 5 shows a further example result of application of the method 10 according to an embodiment to a 3D image dataset of a region containing the colon of a subject. The set-up details of this example are the same as in the example of Fig. 3 and Fig. 4, in that image 22 represents the tomographic reconstruction of the slice, image 28 represents a composite image formed using non-spectral CT data and image 30 represents a composite image formed using spectral CT data, in which an iodine-comprising contrast agent has been rendered translucent. In this example, the imaged colon again contains a polyp 34.

The polyp is not visible in the standard tomographic slice reconstruction 22. It is visible with each of the composite images 28, 30, due to the additional depth information provided by the volume rendering.

A further aspect of the invention provides a processing arrangement adapted to perform a method in accordance with any of the examples outline above or described below, or in accordance with any claim of this application.

A further aspect of the invention also provides a system. One example system 40 in accordance with one or more embodiments is shown in block diagram form in Fig. 6.

The system 40 comprises a processing arrangement 42 as mentioned above, in combination with a display unit 44, arranged operatively coupled with the processing arrangement. In this example, the generated data output 20 may be a display output and the processing arrangement 42 may be adapted to communicate the display output to the display unit 44 to cause display of the generated composite image on the display screen of the display unit.

It is useful for a user to be able to switch between display of the constructed composite image of a given slice and the original slice-wise tomographic slice reconstruction (and optionally also a full volume rendering for the slice, where one has been generated). To facilitate this, a user interface 46 may be provided. In the system of Fig. 6, this is operatively coupled with the processing arrangement 42 and the processing arrangement is arranged to receive one or more user input signals from the user interface.

By way of example, the method performed by the processing arrangement 42 may further comprise selectively generating: a first display output representative of either the tomographic reconstruction for one or more slices, or a second display output representative of the composite reconstruction of one or more slices, and wherein the selection of the first or second display output is dependent upon the user input.

For a best viewing experience, it is preferable that the various rendering modes can be toggled between instantaneously, e.g. between the standard tomographic reconstruction view and the one or more composite images. To facilitate this, the method may comprise selectively toggling the display output between the first and second display outputs, wherein the toggling is triggered by the user input signal. For example, generation of the user input signal may be triggered by pressing of a single key, button or other user control (e.g. a spacebar) on the UI, so that the user is able to quickly and easily toggle between different rendered views.

Other optional interactive settings configurable from the UI could include, by way of example: changing of spectral thresholds for translucency to adjust to low tagging concentration levels, and changing the one or more 3D image datasets that are used in generating the composite image. For example, the user might be able to switch between a 3D dataset which represents conventional Hounsfield values and virtual mono energy Hounsfield unit values.

Embodiments of the invention outlined above provide a number of benefits compared to use of standard tomographic slice reconstruction and compared to use of standard volume renderings, for example endoluminal renderings. In particular, by embedding the volume rendering information in the tomographic reconstruction image, the image information provided by both types of image can be presented in a single image frame. This means that the spatial correspondence between the two is directly communicated to a viewer. It also means that no change in the workflow needs to be performed compared to standard tomographic imaging techniques. Another benefit is that screen space demands are not increased in comparison to standard slice-wise ('trans-sectional') reading, which is beneficial in particular for hand-held devices, e.g. tablets and mobile phones. Where the volume rendering is orthographic volume rendering, this allows for intuitive visual correspondence between with the standard slice-wise viewing, as all size dimensions map directly onto one another. In the context in particular of the example application of colonography, the in-slice embedding of the orthographic volume rendering allows intuitive visual distinction between normal Haustral folds of the colon, and possible polyps. Where spectral data is used (as discussed above), the volume rendering can 'look through' contrast-tagged stool residuals even at low concentration levels, by utilizing the spectral information.

In an advantageous set of embodiments, the obtained tomographic image data is x-ray CT image data. To better understand the nature and origin of the tomographic image data, an example x-ray CT imaging system will now be briefly outlined. In one aspect of the invention, an x-ray CT imaging system may be provided, in combination with a processing arrangement 42 as outlined above, adapted to implement the method 10 for generating the one or more composite images. However this is not essential, and the forthcoming description may simply be used to aid understanding of previously outlined embodiments of the invention.

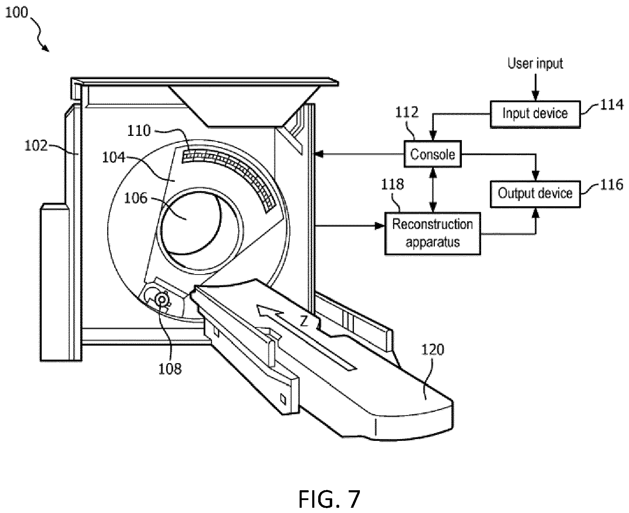

Fig. 7 illustrates an imaging system 100 such as a computed tomography (CT) scanner.

The imaging system 100 includes a generally stationary gantry 102 and a rotating gantry 104. The rotating gantry 104 is rotatably supported by the stationary gantry 102 and rotates around an examination region about a longitudinal or z-axis.

A patient support 120, such as a couch, supports an object or subject such as a human patient in the examination region. The support 120 is configured to move the object or subject for loading, scanning, and/or unloading the object or subject.

A radiation source 108, such as an x-ray tube, is rotatably supported by the rotating gantry 104. The radiation source 108 rotates with the rotating gantry 104 and emits radiation that traverses the examination region 106.

A radiation sensitive detector array 110 subtends an angular arc opposite the radiation source 108 across the examination region 106. The detector array 110 includes one or more rows of detectors that extend along the z-axis direction, detects radiation traversing the examination region 106, and generates projection data indicative thereof.

A general-purpose computing system or computer serves as an operator console 112 and includes an input device(s) 114 such as a mouse, a keyboard, and/or the like and an output device(s) 116 such as a display monitor, a filmer or the like. The console 112 allows an operator to control operation of the system 100.

A reconstruction apparatus 118 processes the projection data and reconstructs volumetric image data. The data can be displayed through one or more display monitors of the output device(s) 116.

The reconstruction apparatus 118 may employ a filtered-backprojection (FBP) reconstruction, a (image domain and/or projection domain) reduced noise reconstruction algorithm (e.g., an iterative reconstruction) and/or other algorithm. It is to be appreciated that the reconstruction apparatus 118 can be implemented through a microprocessors), which executes a computer readable instruction(s) encoded or embed on computer readable storage medium such as physical memory and other non-transitory medium. Additionally or alternatively, the microprocessor(s) can execute a computer readable instruction(s) carried by a carrier wave, a signal and other transitory (or non, non-transitory) medium.

Embodiments of the invention described above employ a processing arrangement. The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method (10) for generating an image (28) based on a tomographic imaging dataset (24) of a 3D object, the method comprising:
obtaining (12) reconstructed tomographic image data for each of a plurality of slices (22) through the 3D object, the reconstructed tomographic image data for each slice comprising pixel values (25) for the slice, the reconstructed tomographic image data for the plurality of slices forming at least one 3D image dataset (24);
for each of at least a subset of the slices
selecting (14) a subset of the pixels (25) of the slice to be rendered using pixel values obtained by at least one volume rendering of the 3D image dataset, and wherein the selection is based at least in part on the pixel value for each pixel in the reconstructed tomographic image data,
performing (16) a volume rendering of at least the selected subset of pixels of the slice based on application of a volume rendering procedure to the 3D imaging dataset, and wherein a plane defined by the slice within the 3D image dataset forms an imaging plane of the volume rendering, and
constructing (18) a composite image rendering (28) of the slice, based on modifying the pixel values of the selected subset of pixels in the slice from the reconstructed tomographic image data using the pixel values from the volume rendering; and
generating (20) a data output representative of the constructed one or more composite images.

2. The method as claimed in claim 1, wherein the volume rendering is generated for only the selected subset of pixels in each slice.

3. The method as claimed in claim 1 or 2, wherein the volume rendering procedure is a volume ray-casting method, and wherein the sampling rays are cast through the 3D image dataset orthogonally with respect to the plane of each slice.

4. The method as claimed in any of claims 1-3, wherein the selection of the subset of pixels is based on identifying pixels which correspond spatially to a target anatomical structure.

5. The method as claimed in any of claims 1-4, wherein the selection of the subset of pixels is based on pre-defined threshold for the pixel value of each pixel in the tomographic slice reconstruction.

6. The method as claimed in claim 5, wherein the tomographic imaging data is x-ray computed tomography (CT) imaging data.

7. The method as claimed in any of claims 1-6, wherein the obtaining the reconstructed image data comprises receiving input tomographic projection data, and performing a tomographic image reconstruction for each slice in turn.

8. The method as claimed in any of claims 1-7, wherein the tomographic image data is spectral CT image data, and wherein the reconstructed tomographic image data includes a plurality of different image reconstructions for each slice, forming a plurality of different 3D image datasets, and wherein each of the different image reconstructions is based on CT projection data corresponding to a different spectral channel.

9. The method as claimed in claim 8, wherein the imaged volume is representative of an anatomical region of a subject, wherein the region contains an administered contrast agent, and wherein the 3D imaging dataset for one of the spectral channels comprises pixel values indicative of a density of the contrast agent at the pixel location.

10. The method as claimed in any of claims 1-9, wherein
the method further comprises receiving a user input signal; and
the method further comprises selectively generating
a first display output representative of either the tomographic reconstruction for one or more slices, or
a second display output representative of the composite image rendering of one or more slices,
wherein the selection of the first or second display output is dependent upon the user input.

11. The method as claimed in claim 10, wherein the method comprises selectively toggling the display output between the first and second display outputs, wherein the toggling is triggered by the user input signal.

12. A computer program product comprising computer program code, the computer program code being executable on a processor, the code configured to cause the processor to perform a method in accordance with any of claims 1-11.

13. A processing arrangement (42) for use in generating an image based on a tomographic imaging dataset of a 3D object, the processing arrangement adapted to:
obtain reconstructed tomographic image data for each of a plurality of slices through the 3D object, the reconstructed tomographic image data for each slice comprising pixel values (25) for the slice, the reconstructed tomographic image data for the plurality of slices forming at least one 3D image dataset (24);
for each of at least a subset of the slices:
select a subset of the pixels (25) of the slice to be rendered using pixel values obtained by at least one volume rendering of the 3D image dataset, and wherein the selection is based at least in part on the pixel value for each pixel in the reconstructed tomographic image data;
perform a volume rendering of at least the selected subset of pixels of the slice based on application of a volume rendering procedure to the 3D imaging dataset, and wherein a plane defined by the slice within the 3D image dataset forms an imaging plane of the volume rendering, and
construct (18) a composite image rendering (28) of the slice, based on modifying the pixel values of the selected subset of pixels in the slice from the reconstructed tomographic image data using the pixel values from the volume rendering; and
generate a data output representative of the constructed one or more composite images.

14. A system, comprising
a processing arrangement as claimed in claim 13, and
a display unit operatively coupled to the processing arrangement for displaying one or more of the composite images.
